# EUROPÄISCHE PATENTSCHRIFT

(11) **EP 3 489 559 B1**
(45) Veröffentlichungstag und Bekanntmachung des Hinweises auf die Patenterteilung: **01.12.2021**
(21) Anmeldenummer: 18203017.1
(22) Anmeldetag: 29.10.2018
(51) Int. Cl.: F16K 31/08, F16K 37/00, F01P 1/00, F16K 31/53, F16K 5/04

(54) **MAGNETISCHES DREHSCHIEBERFLUIDVENTIL**
MAGNETIC CRANK UP SLIDER FLUID VALVE
SOUPAPE À FLUIDE ROTATIVE MAGNÉTIQUE

(30) Priorität: 28.11.2017 DE 102017128127
(43) Veröffentlichungstag der Anmeldung: 29.05.2019
(73) Patentinhaber: Pierburg GmbH, 41460 Neuss (DE)
(72) Erfinder: MÜNICH, Marc-Anton, 14476 Potsdam (DE); SARWAR, Usman, 10827 Berlin (DE); HAWA, Hady, 10827 Berlin (DE)
(74) Vertreter: terpatent Patentanwälte ter Smitten Eberlein-Van Hoof Rütten Daubert

(56) Entgegenhaltungen:
- EP-A1- 2 826 517
- WO-A1-03/100950
- DE-A1-102005 041 973
- DE-A1-102009 033 160
- DE-A1-102014 224 151
- DE-U1- 8 715 977
- JP-A- 2013 081 326
- US-A- 3 134 404
- US-A- 3 347 262
- US-A- 4 327 892
- US-A- 5 083 744
- US-A1- 2011 290 332
- US-A1- 2013 175 463
- US-B1- 9 797 521

## Beschreibung

Die Erfindung betrifft ein magnetisches Drehschieberfluidventil, insbesondere zur Verwendung im Kühlkreislauf eines Kraftfahrzeugs. Das magnetisches Drehschieberfluidventil umfasst ein Ventilgehäuse mit einem Gehäusetopf und einem Gehäusedeckel, das einen Ventilraum aufweist, einen innerhalb des Ventilraums um eine Drehachse drehbar gelagerten Ventilkörper, und eine Magnetkupplung mit einem mit dem Ventilkörper verbundenen Abtriebsrotor mit mindestens einem Abtriebsrotor-Permanentmagneten und einem außerhalb des Ventilraums angeordneten Antriebsrotor mit mindestens einem Antriebsrotor-Permanentmagneten, wobei der Antriebsrotor und der Abtriebsrotor über magnetische Kräfte gekoppelt sind und fluiddicht voneinander getrennt sind, zur Kopplung des Ventilkörpers mit einem Ventilantrieb, wobei der Abtriebsrotor an der radialen Außenseite entlang des Umfangs alternierend magnetisiert ist, der Antriebsrotor an der radialen Innenseite entlang des Umfangs alternierend magnetisiert ist, und der Antriebsrotor ringförmig ausgebildet ist und den Abtriebsrotor zumindest teilweise in Axialrichtung umschließt.

Magnetische Drehschieberfluidventile sind aus dem Stand der Technik bekannt. Magnetische Drehschieberfluidventile weisen ein drehbares Ventilglied und eine magnetische Kupplung zur Kopplung des Ventilglieds mit einem Ventilantrieb auf. Die magnetische Kupplung umfasst mindestens zwei magnetische Kupplungselemente, die einen Magnetkreis bilden. Die kontaktlose magnetische Kupplung ermöglicht es den Ventilantrieb ohne spezielle Dichtungselemente fluiddicht von dem fluiddurchflossenen Ventilraum zu trennen, zum Beispiel durch eine Gehäusewand.

Aus der FR 2 947 606 B1 ist ein magnetisches Drei-Wege-Drehschieberfluidventil bekannt. Der drehbare Ventilkörper ist mit einem mit Permanentmagneten versehenen Abtriebsrotor verbunden. Ein mit Permanentmagneten versehener Antriebsrotor ist mit dem Rotorschaft eines Elektromotors verbunden. Der Antriebsrotor und der Abtriebsrotor sind koaxial übereinander angeordnet und durch eine Gehäusewand voneinander getrennt. Der Antriebsrotor und der Abtriebsrotor sind magnetisch gekoppelt, wodurch eine Rotation des Elektromotor-Schafts direkt auf den Ventilkörper übertragen wird. Bei diesem Ventil besteht jedoch der Nachteil, dass auf Grund der koaxial übereinanderliegenden Anordnung des Antriebsrotors und des Abtriebsrotors viel Bauraum in Axialrichtung benötigt wird. Dies ist insbesondere bei der Verwendung im sehr begrenzten Motorraum eines Kraftfahrzeugs kritisch.

Ein gattungsgemäßes magnetisches Drehschieberfluidventil ist beispielsweise aus der US 4 327 892 A bekannt. Das Drehschieberfluidventil umfasst ein Ventilgehäuse mit einem topfähnlichen Gehäuseteil und einem deckelähnlichen Gehäuseteil. Der Abtriebsrotor ist hier an der radialen Außenseite entlang des Umfangs alternierend magnetisiert. Der Antriebsrotor ist ringförmig ausgebildet, ist an der radialen Innenseite entlang des Umfangs alternierend magnetisiert und umschließt den Abtriebsrotor in Axialrichtung. Auf Grund der radialen Anordnung der beiden Kupplungselemente, also dem Antriebsrotor und dem Abtriebsrotor, ist für die Magnetkupplung und somit für das magnetische Drehschieberfluidventil nur ein geringer Bauraum in Axialrichtung erforderlich. Ähnliche Anordnungen sind aus der US 2013/175463 A1, der US 3 347 262 A und der DE 10 2009 033 160 A1 bekannt. Eine genaue Ermittlung der Position des Abtriebsrotors ist mit den genannten Anordnungen jedoch nicht möglich.

Aus der gattungsfremden US 3 134 404 A ist ferner ein Drehschieberfluidventil bekannt, wobei in einem an dem zu einem Gehäusedeckel gerichteten axialen Ende eines Ventilkörpers ausgeformten Lager-Zapfen ein permanentmagnetisierter Abtriebsmagnet angebracht ist, und wobei außerhalb des Ventilraums mehrere Antriebselektromagnete angeordnet sind, durch die der Abtriebsmagnet und somit der Ventilkörper verdrehbar sind.

Es stellt sich daher die Aufgabe, ein magnetisches Drehschieberfluidventil zu schaffen, welches einen geringen Bauraum aufweist, dadurch flexibel einsetzbar ist und eine präzise Ermittlung der Position des Abtriebsrotors ermöglicht.

Diese Aufgabe wird durch ein magnetisches Drehschieberfluidventil mit den Merkmalen des Anspruchs 1 gelöst.

Erfindungsgemäß weist das magnetische Drehschieberfluidventil einen außerhalb des Ventilraums in einem auf den Gehäusedeckel aufgesetzten Aktorgehäuse angeordneten Magnetfeldsensor zur Detektion der Winkellage des Ventilkörpers auf, wobei an dem Ventilkörper in einem an dem zum Gehäusedeckel gerichteten axialen Ende des Ventilkörpers ausgeformten Lager-Zapfen ein permanentmagnetisierter Sensormagnet angebracht ist und der Magnetfeldsensor das von dem Sensormagnet generierte Magnetfeld detektiert. Der Magnetfeldsensor ist außerhalb des fluiddurchflossenen Ventilraums angeordnet, wodurch keine elektrischen Verbindungen in den fluiddurchflossenen Ventilraum notwendig sind. Über einen solchen Magnetfeldsensor ist es möglich die Stellung des Rotors genau zu ermitteln, so dass eine präzise Verstellung des Ventilkörpers möglich ist. Als Magnetfeldsensor könnte dabei beispielsweise ein Hallsensor zum Einsatz kommen. Durch eine Anordnung des Sensormagneten und des Magnetfeldsensors in geringem Abstand können Störeinflüsse im Magnetfeldsensor-Signal reduziert werden, wodurch die Genauigkeit der Winkellage-Detektion verbessert werden kann. Um die magnetischen Streufelder des Antriebsrotors und des Abtriebsrotors zu reduzieren und somit die magnetische Kopplung zwischen den beiden Rotoren zu verbessern, kann sowohl für den Antriebsrotor als auch für den Abtriebsrotor ein magnetischer Rückschluss, beispielweise in Form einer ferromagnetischen Hülse, vorgesehen werden.

In einer bevorzugten Ausführung ist der ringförmige Antriebsrotor in ein glockenförmiges Antriebsteil integriert, das den Abtriebsrotor zumindest teilweise in Axialrichtung umfasst. Das glockenförmige Antriebsteil erlaubt eine einfache Lagerung des Antriebsrotors in axialer sowie radialer Richtung.

Vorzugsweise umfasst das Ventilgehäuse einen im Wesentlichen zylindrischen Gehäusetopf mit einer ersten zentralen axialen Ventilkörper-Lagerstelle, einen Gehäusedeckel mit einer zweiten zentralen axialen Ventilkörper-Lagerstelle, der den Gehäusetopf fluiddicht verschließt, und ein auf den Gehäusedeckel aufgesetztes Aktorgehäuse. Der Ventilraum wird hierbei durch den Gehäusetopf und den Gehäusedeckel gebildet. Dieser Aufbau ermöglicht eine einfache und kostengünstige Herstellung des Ventilgehäuses. Das auf den Gehäusedeckel aufgesetzte Aktorgehäuse erlaubt zusätzlich eine einfache Wartung des Drehschieberventils.

In einer vorteilhaften Ausgestaltung ist der Ventilantrieb in dem aufgesetzten Aktorgehäuse angeordnet, und somit durch den Gehäusedeckel fluiddicht vom fluiddurchflossenen Ventilraum getrennt. Zusätzlich ist der Ventilantrieb leicht zugänglich und somit einfach zu warten.

In einer besonders vorteilhaften Ausgestaltung ist der Antriebsrotor der Magnetkupplung in dem Aktorgehäuse angeordnet und gleitend auf dem Gehäusedeckel gelagert. Dies ermöglicht eine einfache Lagerung des Antriebsrotors, wobei der Antriebsrotor durch den Gehäusedeckel fluiddicht vom fluiddurchflossenen Ventilraum getrennt ist. Ferner erlaubt diese Anordnung einen modularen Aufbau des Drehschieberventils, da die komplette Antriebseinheit, also der Ventilantrieb und der Antriebsrotor der Magnetkupplung, in dem aufgesetzten Aktorgehäuse angeordnet werden kann und somit einfach ausgetauscht werden kann.

Vorzugsweise ist der Antriebsrotor über ein selbsthemmendes Getriebe mit dem Ventilantrieb verbunden. Durch die Verwendung einer geeigneten Übersetzung des Getriebes ermöglicht dies eine optimierte Regelung des Drehschieberfluidventils. Des Weiteren müssen der Ventilantrieb und der Antriebsrotor nicht mehr koaxial angeordnet sein, wodurch eine bauraumoptimierte Anordnung des Ventilantriebs ermöglicht wird.

In einer vorteilhaften Ausführungsform weist das selbsthemmende Getriebe eine Stirnradgetriebestufe und eine Schneckengetriebestufe auf. Dieses mehrstufige selbsthemmende Getriebe erlaubt eine hohe Momentübersetzung auf kleinem Raum.

In einer besonders vorteilfahren Ausführungsform ist der Antriebsrotor der Magnetkupplung in das Schneckenrad der Schneckengetriebestufe des selbsthemmenden Getriebes integriert. Hierdurch kann der Antriebsrotor auf einfache Weise ohne Vorsehen von weiteren Bauteilen und somit platzsparend ausgeführt werden.

In einer bevorzugten Ausgestaltung weist der Antriebsrotor oder der Abtriebsrotor entlang des Umfangs alternierend permanentmagnetisierte Magnetsegmente auf. Die Verwendung von permanentmagnetisierten Magnetsegmenten erlaubt eine einfache Ausführung des Antriebsrotors und des Abtriebsrotors. Beispielsweise kann der Abtriebsrotor durch an der radialen Außenseite des Ventilkörpers angebrachte oder entlang des Umfangs in den Ventilkörper eingebettete Magnetsegmente ausgeführt werden.

In einer alternativen Ausführungsform kann der Antriebsrotor oder der Abtriebsrotor einen entlang des Umfangs alternierend permanentmagnetisierten Magnetring aufweisen. Dies erlaubt eine einfache Ausführung des Antriebsrotors oder des Abtriebsrotors ohne Vorsehen von weiteren Bauteilen.

In einer vorteilhaften Ausführungsform sind der mindestens eine Antriebsrotor-Permanentmagnet und der mindestens eine Abtriebsrotor-Permanentmagnet auf unterschiedlicher axialer Höhe angeordnet. Auf diese Weise kann eine magnetische Kraft in Axialrichtung auf den Ventilkörper erzeugt werden welche den Ventilkörper beispielsweise in einer axialen Ventilkörper-Lagerstelle fixiert und somit das Bewegungsspiel des Ventilkörpers verringert.

In einer weiteren vorteilhaften Ausgestaltung sind der mindestens eine Antriebsrotor-Permanentmagnet und der mindestens eine Abtriebsrotor-Permanentmagnet derart angeordnet, dass die zueinander gerichteten Magnetflächen des mindestens einen Antriebsrotor-Permanentmagneten und des mindestens einen Abtriebsrotor-Permanentmagneten einen Winkel α zwischen 5° und 45° zueinander aufweisen. Hierdurch kann ebenfalls eine axiale magnetische Kraft auf den Ventilkörper generiert werden, um den Ventilkörper in einer axialen Ventilkörper-Lagerstelle zu fixieren und somit das Bewegungsspiel des Ventilkörpers zu reduzieren.

In einer vorteilhaften Ausführungsform weisen der Antriebsrotor und der Abtriebsrotor eine unterschiedliche Anzahl magnetischer Pole auf. Dies erlaubt eine Vorspannung der magnetischen Kupplung in Tangentialrichtung, wodurch das Bewegungsspiel des Ventilkörpers in Tangentialrichtung reduziert werden kann.

Vorzugsweise ist der Ventilkörper innerhalb des Ventilraums axial durch mindestens einen Lager-Zapfen gelagert. Lager-Zapfen können als Bestandteil des Ventilkörpers ausgeformt sein, wodurch der Ventilkörper ohne Vorsehen von weiteren Bauteilen auf einfache Weise in dem Ventilraum gelagert werden kann.

In einer bevorzugten Ausgestaltung ist der Ventilantrieb ein Elektromotor. Der Elektromotor erlaubt einen besonders einfachen und genauen Antrieb des Ventils in beide Rotationsrichtungen.

Weitere Einzelheiten und Vorteile der vorliegenden Erfindung ergeben sich aus der nachfolgenden Beschreibung der Ausführungsbeispiele in Verbindung mit den beigefügten Figuren, wobei
Figur 1 eine schematische Seitenansicht in geschnittener Darstellung eines erfindungsgemäßen magnetischen Drehschieberfluidventils zeigt,
Figur 2 einen schematischen Querschnitt der Magnetkupplung eines erfindungsgemäßen magnetischen Drehschieberfluidventils zeigt,
Figur 3 eine schematische Darstellung einer Aktoreinheit eines erfindungsgemäßen magnetischen Drehschieberfluidventils zeigt,
Figur 4 zwei alternative Anordnungen der Antriebsrotor-Permanentmagnete eines erfindungsgemäßen magnetischen Drehschieberfluidventils zeigt, und
Figur 5 alternative Ausführungen eines Antriebsrotors und eines Abtriebsrotors eines erfindungsgemäßen magnetischen Drehschieberfluidventils zeigt.

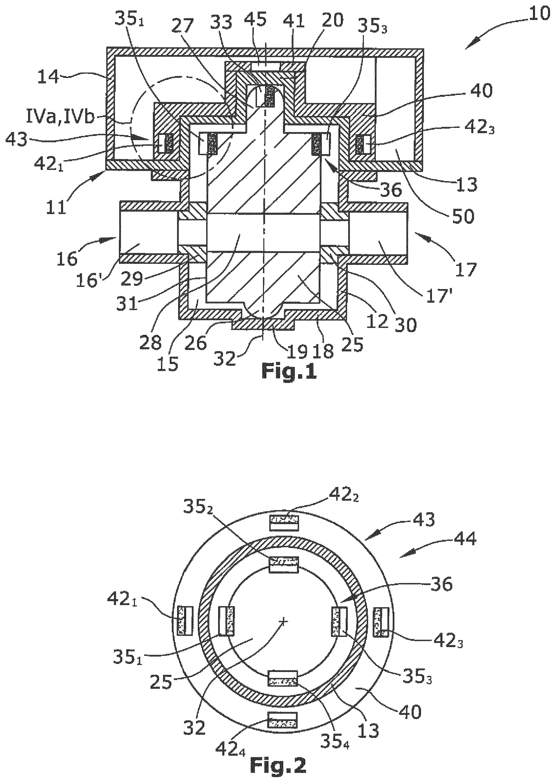

Die Figur 1 zeigt eine schematische Seitenansicht in geschnittener Darstellung eines magnetischen Drehschieberfluidventils 10. Das Drehschieberfluidventil 10 umfasst ein Ventilgehäuse 11 mit einem zylindrischen Gehäusetopf 12, einem glockenförmigen Gehäusedeckel 13 und mit einem auf dem Gehäusedeckel 13 aufgesetzten Aktorgehäuse 14. Der Gehäusetopf 12 und der Gehäusedeckel 13 sind über den gesamten Umfang fluiddicht miteinander verbunden, vorzugsweise durch Laserschweißen, und bilden einen Ventilraum 15.

Der Ventilraum 15 weist einen Einlass 16 mit einem Einlassstutzen 16' und einen Auslass 17 mit einem Auslassstutzen 17' auf. Ferner ist im Gehäusetopf-Boden 18 eine erste zentrale Ventilkörper-Lagerstelle 19 ausgebildet und ist im Gehäusedeckel 13 eine zweite zentrale Ventilkörper-Lagerstelle 20 ausgebildet.

In dem Ventilraum 15 ist ein zylinderförmiger Ventilkörper 25 angeordnet. An dem zum Gehäusetopf-Boden 18 gerichteten axialen Ende des Ventilkörpers 25 ist eine halbkugelförmige Lager-Ausformung 26 ausgeformt. An dem zum Gehäusedeckel 13 gerichteten axialen Ende des Ventilkörpers 25 ist ein Lager-Zapfen 27 ausgeformt. Die halbkugelförmige Lager-Ausformung 26 ragt in die Ventilkörper-Lagerstelle 19 und der Lager-Zapfen 27 ragt in die Ventilkörper-Lagerstelle 20. Auf diese Weise ist der Ventilkörper 25 in dem Ventilraum 15 drehbar um die Drehachse 32 gelagert. In den Lager-Zapfen 27 ist ein diametral permanentmagnetisierter stabförmiger Sensormagnet 33 derart eingebettet, dass die Zylinderachse des Sensormagneten 33 auf der Drehachse 32 liegt.

Der Ventilkörper 25 weist auf axialer Höhe des Einlassstutzens 16' und des Auslassstutzens 17' einen in Radialrichtung verlaufenden Durchlasskanal 28 auf, über den der Einlass 16 und der Auslass 17 fluidisch miteinander verbunden werden können. An dem zum Ventilkörper 25 weisenden Ende des Einlassstutzens 16' und des Auslassstutzens 17' ist jeweils ein den Einlassstutzen 16' bzw. den Auslassstutzen 17' umgebendes schematisch dargestelltes Dichtelement 29,30 angeordnet, welches dichtend an einer Außenumfangsfläche 31 des Ventilkörpers 25 anliegt. Über eine Drehung des Ventilkörpers 25 um die Drehachse 32 und den damit einstellbaren Grad der Überdeckung des Durchlasskanals 28 mit dem Einlassstutzen 16' bzw. dem Auslassstutzen 17' kann die Durchflussmenge des Drehschieberfluidventils 10 reguliert werden.

An dem zum Gehäusedeckel 13 gerichteten axialen Ende des Ventilkörpers 25 sind auf der Außenumfangsfläche 31 gleichmäßig über den Umfang verteilt vier quaderförmige diametral-magnetisierte Abtriebsrotor-Permanentmagnete 35₁-35₄ angebracht. Die Abtriebsrotor-Permanentmagnete 35₁-35₄ sind derart angeordnet, dass sie einen ringförmigen an der radialen Außenseite entlang des Umfangs alternierend magnetisierten Abtriebsrotor 36 bilden, der um die Drehachse 32 drehbar ist.

In dem Aktorgehäuse 14 ist ein glockenförmiges Antriebsteil 40 drehbar zu der Drehachse 32 gleitend auf dem Gehäusedeckel 13 gelagert und in Axialrichtung durch eine zentral angeordnete Sicherungsscheibe 41 fixiert. In der Sicherungsscheibe 41 ist in zentraler Lage ein Magnetfeldsensor 45 eingelassen, der das von dem Sensormagneten 33 erzeugte Magnetfeld detektiert um die Drehwinkelposition des Ventilkörpers 25 zu bestimmen.

In dem zu dem Gehäusedeckel 13 gerichteten ringförmigen Ende des glockenförmigen Antriebsteils 40 sind gleichmäßig über den Umfang verteilt vier quaderförmige diametral-magnetisierte Antriebsrotor-Permanentmagnete 42₁-42₄ eingelassen. Die Antriebsrotor-Permanentmagnete 42₁-42₄ sind derart angeordnet, dass sie einen ringförmigen an der radialen Innenseite entlang des Umfangs alternierend magnetisierten Antriebsrotor 43 bilden, der um die Drehachse 32 drehbar ist.

Der Antriebsrotor 43 und der Abtriebsrotor 36 sind über die von den Antriebsrotor-Permanentmagneten 42₁-42₄ und von den Abtriebsrotor-Permanentmagneten 35₁-35₄ generierten Magnetfelder miteinander gekoppelt und bilden wie in der Figur 2 schematisch dargestellt eine berührungslose Magnetkupplung 44. Die beiden Kupplungselemente, also der in das Antriebsteil 40 integrierte Antriebsrotor 43 mit den Antriebsrotor-Permanentmagneten 42₁-42₄ und der am Ventilkörper 25 angebrachte Abtriebsrotor 36 mit den Abtriebsrotor-Permanentmagneten 35₁-35₄ sind hierbei durch den Gehäusedeckel 13 fluiddicht voneinander getrennt.

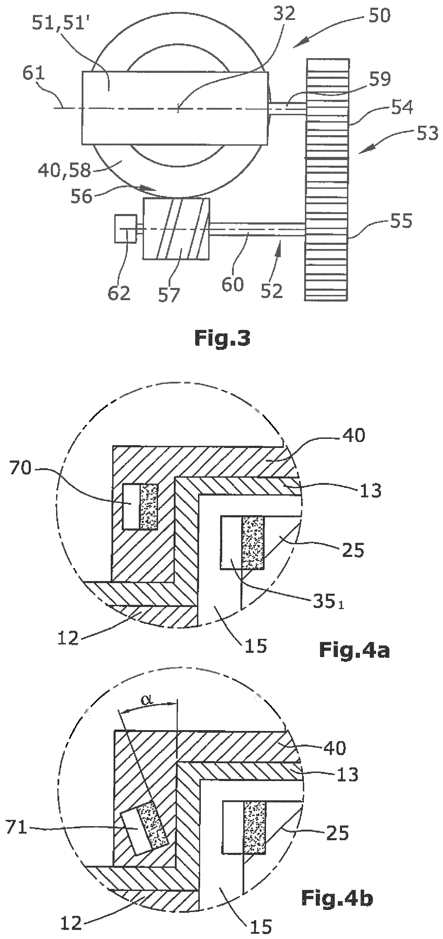

In dem Aktorgehäuse 14 ist ferner eine Aktoreinheit 50 mit einem Ventilantrieb 51 und mit einem selbsthemmenden Getriebe 52 angeordnet. Die Figur 3 zeigt schematisch eine erfindungsgemäße Ausführung der Aktoreinheit 50. Der Ventilantrieb 51 ist durch einen Elektromotor 51' gebildet, der mit Hilfe des selbsthemmenden Getriebes 52 und der Magnetkupplung 44 eine einfach regelbare Drehung des Ventilkörpers 25 in beide Rotationsrichtungen ermöglicht. Das selbsthemmende Getriebe 52 ist mehrstufig ausgeführt und umfasst eine Stirnradgetriebestufe 53 mit den Stirn-Zahnrädern 54,55, eine Schneckengetriebestufe 56 mit einer Schnecke 57 und einem Schneckenrad 58, welches in das Antriebsteil 40 integriert ist, sowie umfasst zwei Wellen 59, 60.

Eine Drehung der vom Ventilantrieb 51 angetriebenen ersten Welle 59 um die Drehachse 61 erzeugt über die Stirnradgetriebestufe 53 eine Drehung der zweiten Welle 59 um die Drehachse 62. Die Drehung der Welle 59 erzeugt wiederum über die Schnecke 57 eine Drehung des Schneckenrads 58 um die Drehachse 32. Da das Schneckenrad 58 in das Antriebsteil 40 integriert ist, entspricht dies somit einer Drehung des Antriebsteils 40 um die Drehachse 32. Auf Grund der magnetischen Kopplung zwischen dem in das Antriebsteil 40 integrierten Antriebsrotor 43 und dem an dem Ventilkörper 25 angebrachten Abtriebsrotor 36 wird eine Drehung des Antriebsteils 40 direkt in eine Drehung des Ventilkörpers 25 umgesetzt.

Die Figur 4 zeigt zwei alternative erfindungsgemäße Anordnungen der Antriebsrotor-Permanentmagnete 42₁-42₄ innerhalb des Antriebsteils 40. Bei der Ausführung nach der Figur 4a sind die Antriebsrotor-Permanentmagnete 70 in Axialrichtung von den Abtriebsrotor-Permanentmagneten 35 versetzt angeordnet. Dies resultiert in einer axialen Komponente der zwischen den Antriebsrotor-Permanentmagneten 70 und den Abtriebsrotor-Permanentmagneten 35 wirkenden magnetischen Kraft, wodurch der Ventilkörper 25 mit seinem Lager-Zapfen 27 in Axialrichtung in die Ventilkörper-Lagerstelle 20 gezogen wird. Hierdurch kann das axiale Bewegungsspiel des Ventilkörpers 25 in dem Ventilraum 15 reduziert werden.

Bei der Ausführung nach der Figur 4b sind die Antriebsrotor-Permanentmagnete 71 gegenüber den Abtriebsrotor-Permanentmagneten 35 verkippt angeordnet, so dass die zueinander gerichteten Magnetflächen der Antriebsrotor-Permanentmagnete 71 und der Abtriebsrotor-Permanentmagnete 35 einen Winkel α zwischen 5° und 45° zueinander aufweisen. Durch die verkippte Anordnung der Antriebsrotor-Permanentmagnete 71 wird ebenfalls eine magnetische Kraft in Axialrichtung auf den Ventilkörper 25 generiert, wodurch das axiale Bewegungsspiel des Ventilkörpers 25 in dem Ventilraum 15 reduziert werden kann.

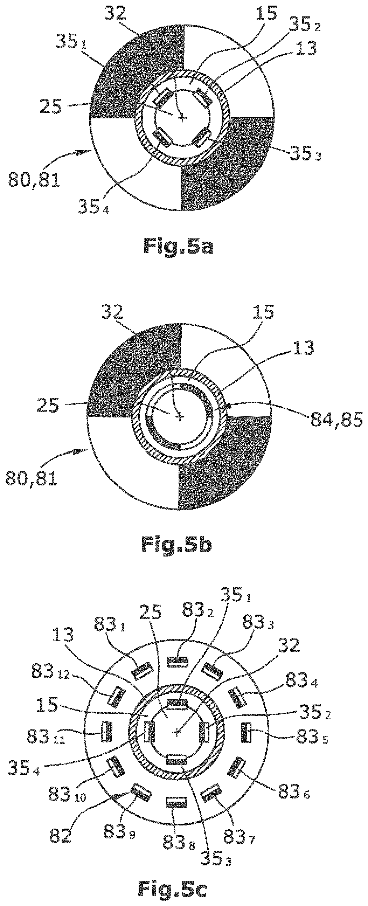

Die Figur 5 zeigt alternative Ausführungen des Antriebsrotors 80,82 und des Abtriebsrotors 84. Bei der Ausführung nach der Figur 5a ist der Antriebsrotor 80 als entlang des Umfangs alternierend permanentmagnetisierter Magnetring 81 ausgeführt. Bei der Ausführung nach der Figur 5b ist neben dem Antriebsrotor 80 auch der Abtriebsrotor 84 als entlang des Umfangs alternierend permanentmagnetisierter Magnetring 85 ausgeführt. Bei der Ausführung nach Figur 5c weist der Antriebsrotor 82 zwölf gleichmäßig über den Umfang des Antriebsrotors 82 verteilte Antriebsrotor-Permanentmagnete 83₁-83₁₂ auf. Durch die unterschiedliche Anzahl von Antriebsrotor-Permanentmagneten 83₁-83₁₂ und Abtriebsrotor-Permanentmagneten 35₁-35₄, und die daraus resultierende unterschiedliche Anzahl magnetischer Pole des Antriebsrotors 83 und des Abtriebsrotors 36, kann der Abtriebsrotor 36 und somit auch der Ventilkörper 25 in Tangentialrichtung vorgespannt werden. Hierdurch kann das Bewegungsspiel des Ventilkörpers 25 in Tangentialrichtung reduziert werden.

Das erfindungsgemäße magnetische Drehschieberventil ist nicht auf das beschriebene Drehschieberventil begrenzt. So kann sich beispielsweise die Anzahl der Einlassstutzen, der Auslassstutzen und der Durchlasskanäle von dem beschriebenen Ausführungsbeispiel unterscheiden.

Auf Grund der radialen Anordnung des Antriebsrotors und des Abtriebsrotors benötigt die Magnetkupplung nur einen geringen axialen Bauraum. Das mehrstufige selbsthemmende Getriebe erlaubt es zusätzlich, die Komponenten der Aktoreinheit, also den Ventilantrieb und das Getriebe, bauraumoptimiert anzuordnen, wodurch der benötigte Bauraum zusätzlich verringert werden kann.

### Bezugszeichenliste

- 10: Drehschieberfluidventil
- 11: Ventilgehäuse
- 12: Gehäusetopf
- 13: Gehäusedeckel
- 14: Aktorgehäuse
- 15: Ventilraum
- 16: Einlass
- 16': Einlassstutzen
- 17: Auslass
- 17': Auslassstutzen
- 18: Gehäusetopf-Boden
- 19: Ventilkörper-Lagerstelle
- 20: Ventilkörper-Lagerstelle
- 25: Ventilkörper
- 26: Lager-Ausformung
- 27: Lager-Zapfen
- 28: Durchlasskanal
- 29: Dichtelement
- 30: Dichtelement
- 31: Außenumfangsfläche
- 32: Drehachse
- 33: Sensormagnet
- 35₁-35₄: Abtriebsrotor-Permanentmagnete
- 36: Abtriebsrotor
- 40: Antriebsteil
- 41: Sicherungsscheibe
- 42₁-42₄: Antriebsrotor-Permanentmagnete
- 43: Antriebsrotor
- 44: Magnetkupplung
- 45: Magnetfeldsensor
- 50: Aktoreinheit
- 51: Ventilantrieb
- 51': Elektromotor
- 52: selbsthemmendes Getriebe
- 53: Stirnradgetriebestufe
- 54: Stirn-Zahnrad
- 55: Stirn-Zahnrad
- 56: Schneckengetriebestufe
- 57: Schnecke
- 58: Schneckenrad
- 59: Welle
- 60: Welle
- 61: Drehachse
- 62: Drehachse
- 70: Antriebsrotor-Permanentmagnete
- 71: Antriebsrotor-Permanentmagnete
- 80: Antriebsrotor
- 81: Magnetring
- 82: Antriebsrotor
- 83₁-83₁₂: Antriebsrotor-Permanentmagnete
- 84: Abtriebsrotor
- 85: Magnetring

## Patentansprüche

1. Magnetisches Drehschieberfluidventil (10) mit
einem Ventilgehäuse (11) umfassend einen
zylindrischen Gehäusetopf (12) und einen glockenförmigen
Gehäusedeckel (13), das einen Ventilraum (15) aufweist,
einem Ventilkörper (25), der innerhalb des Ventilraums (15) um eine Drehachse (32) drehbar gelagert ist,
einer Magnetkupplung (44) mit einem am Ventilkörper (25) angebrachten Abtriebsrotor (36) mit mindestens einem Abtriebsrotor-Permanentmagneten (35₁-35₄) und einem außerhalb des Ventilraums (15) angeordneten Antriebsrotor (43) mit mindestens einem Antriebsrotor-Permanentmagneten (42₁-42₄), wobei der Antriebsrotor (43) und der Abtriebsrotor (36) über magnetische Kräfte gekoppelt sind und fluiddicht voneinander getrennt sind, zur Kopplung des Ventilkörpers (25) mit einem Ventilantrieb (51), wobei der Abtriebsrotor (36) an der radialen Außenseite entlang des Umfangs alternierend magnetisiert ist,
der Antriebsrotor (43) an der radialen Innenseite entlang des Umfangs alternierend magnetisiert ist, und
der Antriebsrotor (43) ringförmig ausgebildet ist und den Abtriebsrotor (36) zumindest teilweise in Axialrichtung umschließt,
**dadurch gekennzeichnet, dass**
das magnetische Drehschieberfluidventil (10) einen außerhalb des Ventilraums (15) in einem auf den Gehäusedeckel (13) aufgesetzten Aktorgehäuse (14) angeordneten Magnetfeldsensor (45) zur Detektion der Winkellage des Ventilkörpers (25) aufweist, wobei an dem Ventilkörper (25) in einem an dem zum Gehäusedeckel (13) gerichteten axialen Ende des Ventilkörpers (25) ausgeformten Lager-Zapfen (27) ein permanentmagnetisierter Sensormagnet (33) angebracht ist und der Magnetfeldsensor (45) das von dem Sensormagnet (33) generierte Magnetfeld detektiert.

2. Magnetisches Drehschieberfluidventil (10) nach Anspruch 1,
**dadurch gekennzeichnet" dass**
der ringförmige Antriebsrotor (43) in ein glockenförmiges Antriebsteil (40) integriert ist, das den Abtriebsrotor (36) zumindest teilweise in Axialrichtung umfasst.

3. Magnetisches Drehschieberfluidventil (10) nach Anspruch 1 oder 2, **dadurch gekennzeichnet, dass**
der zylindrische Gehäusetopf (12) des Ventilgehäuses (11) eine erste zentrale axiale Ventilkörper-Lagerstelle (19) aufweist,
und der den Gehäusetopf (12) fluiddicht
verschließende Gehäusedeckel (13)
eine zweite zentrale axiale Ventilkörper-Lagerstelle (20) aufweist.

4. Magnetisches Drehschieberfluidventil (10) nach Anspruch 3,
**dadurch gekennzeichnet, dass**
der mit dem Ventilkörper (25) koppelbare Ventilantrieb (51) in dem Aktorgehäuse (14 anordenbar ist.

5. Magnetisches Drehschieberfluidventil (10) nach Anspruch 3 oder 4,
**dadurch gekennzeichnet, dass**
der Antriebsrotor (43) in dem Aktorgehäuse (14) gleitend auf dem Gehäusedeckel (13) gelagert ist.

6. Magnetisches Drehschieberfluidventil (10) nach einem der vorhergehenden Ansprüche,
**dadurch gekennzeichnet, dass**
der Antriebsrotor (43) über ein selbsthemmendes Getriebe (52) mit dem Ventilantrieb (51) koppelbar ist.

7. Magnetisches Drehschieberfluidventil (10) nach Anspruch 6,
**dadurch gekennzeichnet, dass**
das selbsthemmende Getriebe (52) eine Stirnradgetriebestufe (53) und eine Schneckengetriebestufe (56) aufweist.

8. Magnetisches Drehschieberfluidventil (10) nach Anspruch 7,
**dadurch gekennzeichnet, dass**
das der Antriebsrotor (43) in das Schneckenrad (58) der Schneckengetriebestufe (56) integriert ist.

9. Magnetisches Drehschieberfluidventil (10) nach einem der vorhergehenden Ansprüche,
**dadurch gekennzeichnet, dass**
der Antriebsrotor (43) oder der Abtriebsrotor (36) entlang des Umfangs alternierend permanentmagnetisierte Magnetsegmente (42₁-42₄) aufweist.

10. Magnetisches Drehschieberfluidventil (10) nach einem der vorhergehenden Ansprüche,
**dadurch gekennzeichnet, dass**
der Antriebsrotor (80) oder der Abtriebsrotor (84) einen entlang des Umfangs alternierend permanentmagnetisierten Magnetring (81,85) aufweist.

11. Magnetisches Drehschieberfluidventil (10) nach einem der vorhergehenden Ansprüche,
**dadurch gekennzeichnet, dass**
der mindestens eine Antriebsrotor-Permanentmagnet (70) und der mindestens eine Abtriebsrotor-Permanentmagnet (35₁-35₄) auf unterschiedlicher axialer Höhe angeordnet sind.

12. Magnetisches Drehschieberfluidventil (10) nach einem der vorhergehenden Ansprüche,
**dadurch gekennzeichnet, dass**
der mindestens eine Antriebsrotor-Permanentmagnet (71) und der mindestens eine Abtriebsrotor-Permanentmagnet (35₁-35₄) derart angeordnet sind, dass die zueinander gerichteten Magnetflächen des mindestens einen Antriebsrotor-Permanentmagneten (71) und des mindestens einen Abtriebsrotor-Permanentmagneten (35₁-35₄) einen Winkel α zwischen 5° und 45° zueinander aufweisen.

13. Magnetisches Drehschieberfluidventil (10) nach einem der vorhergehenden Ansprüche,
**dadurch gekennzeichnet, dass**
der Antriebsrotor (82) und der Abtriebsrotor (36) eine unterschiedliche Anzahl magnetischer Pole aufweisen.

14. Magnetisches Drehschieberfluidventil (10) nach einem der vorhergehenden Ansprüche,
**dadurch gekennzeichnet, dass**
der Ventilkörper (25) innerhalb des Ventilraums (15) axial durch den
Lager-Zapfen (27) gelagert ist.

15. Magnetisches Drehschieberfluidventil (10) nach einem der vorhergehenden Ansprüche,
**dadurch gekennzeichnet, dass**
der : Ventilantrieb (51) ein Elektromotor (51') ist.

## Claims

1. Magnetic rotary slide fluid valve (10) comprising a valve housing (11) having a cylindrical housing can (12) and a bell-shaped housing cover (13) with a valve chamber (15), a valve body (25) mounted within the valve chamber (15) rotatably about an axis of rotation (32), a magnetic coupling (44) with an output rotor (36) mounted to the valve body (25) and having at least one output rotor permanent magnet (35₁-35₄), and with a drive rotor (43) arranged outside the valve chamber (15) and having at least one drive rotor permanent magnet (42₁-42₄), wherein the drive rotor (43) and the output rotor (36) are coupled by magnetic forces and are separated from each other in a fluid-tight manner, for coupling the valve body (25) to a valve drive (51), wherein the output rotor (36) is alternately magnetized along the circumference on the radial outside, the drive rotor (43) is alternately magnetized along the circumference on the radially inner side, and the drive rotor (43) is designed annular and encloses the output rotor (36) at least partially in the axial direction,
**characterized in that**
the magnetic rotary slide fluid valve (10) comprises a magnetic field sensor (45) for the detection of the angular position of the valve body (25), the magnetic field sensor (45) being arranged outside the valve chamber (15) in an actuator housing (14) set on the housing cover (13), wherein a permanently magnetized sensor magnet (33) is mounted on the valve body (25) in a bearing pin (27) formed at an axial end of the valve body (25) directed to the housing cover (13), and the magnetic field sensor (45) detects the magnetic field generated by the sensor magnet (33).

2. Magnetic rotary slide fluid valve (10) according to claim 1, **characterized in that** the annular drive rotor (43) is integrated in a bell-shaped drive element (40) that encloses the output rotor (36) at least partly in the axial direction.

3. Magnetic rotary slide fluid valve (10) according to claim 1 or 2, **characterized in that** the cylindrical housing can (12) of the valve housing (11) has a first central axial valve body bearing point (19), and the housing cover (13) closing the housing can (12) in a fluid-tight manner has a second central axial valve body bearing point (20).

4. Magnetic rotary slide fluid valve (10) according to claim 3, **characterized in that** the valve drive (51) adapted to be coupled with the valve body (25) can be arranged in the actuator housing (14).

5. Magnetic rotary slide fluid valve (10) according to claim 3 or 4, **characterized in that,** in the actuator housing (14), the drive rotor (43) is slidably mounted on the housing cover (13).

6. Magnetic rotary slide fluid valve (10) according to one of the preceding claims, **characterized in that** the drive rotor (43) is adapted to be coupled with the valve drive (51) via a self-locking gear (52).

7. Magnetic rotary slide fluid valve (10) according to claim 6, **characterized in that** the self-locking gear (52) comprises a spur gear stage (53) and a worm gear stage (56).

8. Magnetic rotary slide fluid valve (10) according to claim 7, **characterized in that** the drive rotor (43) is integrated into the worm wheel (58) of the worm gear stage (56).

9. Magnetic rotary slide fluid valve (10) according to one of the preceding claims, **characterized in that** the drive rotor (43) or the output rotor (36) comprises magnet segments (42₁-42₄) being alternatingly permanently magnetized along the circumference.

10. Magnetic rotary slide fluid valve (10) according to one of the preceding claims, **characterized in that** the drive rotor (80) or the output rotor (84) comprises a magnet ring (81, 85) being alternatingly permanently magnetized along the circumference.

11. Magnetic rotary slide fluid valve (10) according to one of the preceding claims, **characterized in that** the at least one drive motor permanent magnet (70) and the at least one output rotor permanent magnet (35₁ - 35₄) are arranged at different axial heights.

12. Magnetic rotary slide fluid valve (10) according to one of the preceding claims, **characterized in that** the at least one drive rotor permanent magnet (71) and the at least one output rotor permanent magnet (35₁-35₄) are arranged such that the magnet surfaces of at least one drive rotor permanent magnet (71) and the at least one output rotor permanent magnet (35₁-35₄) facing each other have an angle α between 5° and 45° with respect to each other.

13. Magnetic rotary slide fluid valve (10) according to one of the preceding claims, **characterized in that** the drive rotor (82) and the output rotor (26) have different numbers of magnetic poles.

14. Magnetic rotary slide fluid valve (10) according to one of the preceding claims, **characterized in that,** in the valve chamber (15), the valve body (25) is axially supported by the bearing pin (27).

15. Magnetic rotary slide fluid valve (10) according to one of the preceding claims, **characterized in that** the valve drive (51) is an electric motor (51').

## Revendications

1. Vanne de fluide à tiroir rotatif magnétique (10) avec un carter de vanne (11) comportant un pot de carter (12) cylindrique et un couvercle de carter (13) en forme de cloche comprenant une chambre de vanne (15),
un corps de vanne (25) supporté dans la chambre de vanne (15) de manière rotative autour d'un axe de rotation (32),
un couplage magnétique (44) avec un rotor de sortie (36) monté sur le corps de vanne (25) et comprenant au moins un aimant permanent du rotor de sortie (35₁-35₄) et un rotor d'entrainement (43) disposé hors de la chambre de vanne (15) et comprenant au moins un aimant permanent du rotor d'entrainement (42₁-42₄), ledit rotor d'entrainement (43) et ledit rotor de sortie (36) étant couplé par des forces magnétiques et étant séparé l'un de l'autre de manière étanche à fluide pour le couplage du corps de vanne (25) avec un entrainement de vanne (51), ledit rotor de sortie (36) étant magnétisé en alternance sur l'extérieur radial le long de la circonférence,
ledit rotor d'entrainement (43) étant magnétisé en alternance sur l'intérieur radial le long de la circonférence, et
ledit rotor d'entrainement (43) est en forme annulaire et entoure le rotor de sortie (36) au moins partiellement dans la direction axiale,
**caractérisée en ce que**
la vanne de fluide à tiroir rotatif magnétique (10) comprend un capteur de champ magnétique (45) pour la détection de la position angulaire du corps de vanne (25), le capteur étant disposé hors de la chambre de vanne (15) dans un carter d'actionneur (14) placé sur le couvercle de carter (13), un aimant de capteur (33) magnétisé en permanence étant monté sur ledit corps de vanne (25) dans une broche de support (27) formée dans une extrémité axiale du corps de vanne (25) tournée vers le couvercle de carter (13) et ledit capteur de champ magnétique (45) détecte le champ magnétique généré par l'aimant de capteur (33).

2. Vanne de fluide à tiroir rotatif magnétique (10) selon la revendication 1, **caractérisée en ce que** le rotor d'entrainement (43) est intégré dans un élément d'entrainement (40) en forme de cloche entourant ledit rotor de sortie (36) au moins partiellement dans la direction axiale.

3. Vanne de fluide à tiroir rotatif magnétique (10) selon la revendication 1 ou 2, **caractérisée en ce que** le pot de carter (12) cylindrique du carter de vanne (11) comprend une première position de support du corps de vanne (10) centrale axiale, et le couvercle de carter (13) renfermant le pot de carter (12) de manière étanche à fluide comprend une deuxième position de support du corps de vanne (20) centrale axiale.

4. Vanne de fluide à tiroir rotatif magnétique (10) selon la revendication 3, **caractérisée en ce que** l'entrainement (51) apte à être couplé avec le corps de vanne (25) peut être disposé dans le carter d'actionneur (14).

5. Vanne de fluide à tiroir rotatif magnétique (10) selon la revendication 3 ou 4, **caractérisée en ce que** dans le carter d'actionneur (14), le rotor d'entrainement (43) est supporté de manière glissante sur le couvercle de carter (13).

6. Vanne de fluide à tiroir rotatif magnétique (10) selon l'une quelconque des revendications précédentes, **caractérisée en ce que** le rotor d'entrainement (43) peut être couplé avec l'entrainement de vanne (51) par l'intermédiaire d'un engrenage autobloquant (57).

7. Vanne de fluide à tiroir rotatif magnétique (10) selon la revendication 6, **caractérisée en ce que** l'engrenage autobloquant (52) comprend un étage d'engrenage droit (53) et un étage d'engrenage à vis sans fin (56).

8. Vanne de fluide à tiroir rotatif magnétique (10) selon la revendication 7, **caractérisée en ce que** le rotor d'entrainement (43) est intégré dans la vis sans fin (58) de l'étage d'engrenage à vis sans fin (56).

9. Vanne de fluide à tiroir rotatif magnétique (10) selon l'une quelconque des revendications précédentes, **caractérisée en ce que** le rotor d'entrainement (43) ou le rotor de sortie (36) comprend des segments d'aimant (42₁-42₄) magnétisés en permanence en alternance le long de la circonférence.

10. Vanne de fluide à tiroir rotatif magnétique (10) selon l'une quelconque des revendications précédentes, **caractérisée en ce que** le rotor d'entrainement (80) ou le rotor de sortie (84) comprend un anneau d'aimant (81, 85) magnétisé en permanence en alternance le long de la circonférence.

11. Vanne de fluide à tiroir rotatif magnétique (10) selon l'une quelconque des revendications précédentes, **caractérisée en ce que** ledit au moins un aimant permanent du rotor d'entrainement (70) et ledit au moins un aimant permanent du rotor de sortie (35₁-35₄) sont disposés à des niveaux axiaux différents.

12. Vanne de fluide à tiroir rotatif magnétique (10) selon l'une quelconque des revendications précédentes, **caractérisée en ce que** ledit au moins un aimant permanent du rotor d'entrainement (71) et ledit au moins un aimant permanent du rotor de sortie (35₁-35₄) sont disposés de sorte que les surfaces d'aimant dudit au moins un aimant permanent du rotor d'entrainement (71) et dudit au moins un aimant permanent du rotor de sortie (35₁-35₄) tournées l'une vers l'autre présentent un angle α entre 5° et 45° l'une par rapport à l'autre.

13. Vanne de fluide à tiroir rotatif magnétique (10) selon l'une quelconque des revendications précédentes, **caractérisée en ce que** le rotor d'entrainement (80) et le rotor de sortie (84) comprennent différents nombres de pôles magnétiques.

14. Vanne de fluide à tiroir rotatif magnétique (10) selon l'une quelconque des revendications précédentes, **caractérisée en ce que,** dans la chambre de vanne (15), le corps de vanne (25) est supporté axialement par la broche de support (27).

15. Vanne de fluide à tiroir rotatif magnétique (10) selon l'une quelconque des revendications précédentes, **caractérisée en ce que** l'entrainement de vanne (51) est un moteur électrique (51').
